(19) Europäisches Patentamt
European Patent Office
Office européen des brevets

(11) **EP 2 143 938 A1**

(12) **EUROPEAN PATENT APPLICATION**
published in accordance with Art. 153(4) EPC

(43) Date of publication:
**13.01.2010 Bulletin 2010/02**

(51) Int Cl.:
**F03D 3/04** *(2006.01)*

(21) Application number: **08753891.4**

(22) Date of filing: **28.03.2008**

(86) International application number:
**PCT/RU2008/000184**

(87) International publication number:
**WO 2008/121024 (09.10.2008 Gazette 2008/41)**

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **29.03.2007 RU 2007111535**

(71) Applicants:
- **Bolotov, Sergei Albertovich**
  **Moscow 109145 (RU)**
- **Iliintsev, Oleg Nikolaevich**
  **Moskow 127224 (RU)**
- **Bolotov, Albert Vasilieivich**
  **Almaty 050013 (KZ)**

(72) Inventors:
- **OTARASHVILI, Zurab Avtandilovich**
  **Moskovskaya oblast, 141700 (RU)**
- **PODGORNY, Evgeny Valerianovich**
  **Moskovskaya oblast, 142132 (RU)**
- **TARANNIKOV, Leonid Anatolievich**
  **Moskovskaya oblast, 142702 (RU)**
- **BOLOTOV, Nikita Sergeevich**
  **Moscow, 109145 (RU)**

(74) Representative: **HOFFMANN EITLE**
**Patent- und Rechtsanwälte**
**Arabellastrasse 4**
**81925 München (DE)**

(54) **WIND-DRIVEN POWER PLANT**

(57) The invention relates to a wind-driven power plant using wind energy for producing electric power. The inventive wind-driven power plant comprises several co-axially arranged cylindrical units (1, 1a) of a wind turbine, each of which comprises a stator with concave-convex plates, a rotor with concave-convex blades and an electric generator (6), the rotor of which is mechanically connected to at least one rotor of the wind turbine. According to the invention, at least one electric generator (6) is positioned between the units (1, 1a) of the wind turbine, the rotor of the generator being mechanically connected to the rotor of at least one unit (1) of the wind turbine, which is placed on one side of the generator (6), and the stator of the generator being connected to at least one unit (1a) of the wind turbine which is placed on the other side of the generator. The plates of the stator and the blades of the rotor of at least one unit of the wind turbine which is placed on one side of the generator and the plates of the stator and the blades of the rotor of at least one unit of the wind turbine which is placed on the other side of the generator are positioned in such a way that the rotors of said units rotate in the opposite directions by wind action. The wind-driven power plant makes it possible to extend the range of used wind speeds towards small values thereof, to increase the wind energy efficiency and to reduce weight and size parameters of electric generators.

Fig.1

## Description

## Field of the Intention

The invention relates to power generation, in particular to using wind energy for generating electric power for a remote region and for energy supply to local and centralized power systems.

## Background of the Intention

A few types of wind-driven power plants with horizontal and vertical rotation axes of rotors of propeller, dram and rotor type (Robert Gash (Harsg.), Windkraftanlagen - B.G. Teubner, Stutgart, 1993). However only propeller-type plant with three blades are used in practice. Such plants have blades of complicated design, an expensive reducer with a large reduction ratio between the wind wheel and an electric generator, the generator itself, a computer for controlling position of the blades and positioning the wheel according to the direction of air flow. Due to large weight of the wind-driven power plant head, the wind wheel and the blades, the control system cannot provide proper orientation of the wheel when wind quickly changes its speed and direction. Constant mismatch of the blade and wheel position and the direction and speed of wind leads to the utilization factor of the wind-driven power plant of not higher than 10-23%. Designs of wind-driven power plants for using winds of any direction having vertical position of rotation axes and Darrieus blades (Robert Gash (Harsg.), Windkraftanlagen - B.G. Teubner, Stutgart, 1993) or Savonius blades ((US 1766765) are known but they are practically not used as it is difficult to set their working mode.

A wind-rotor power plant is known from patent KZ 3355. The blocks of the plant include modules comprising cylindrical rotors with volume profiled blades and movable directing units adjusted to the wind direction by weather vanes. Two or more generators are used for generating power, said generators are coupled with the rotor shaft through a starting clutch and mechanical transmission. However it is practically impossible to control operatively the directing unit at multymodule plant due to its large weight. Therefore it is also impossible to achieve high wind energy utilization factor. The starting clutch and mechanical transmission decrease efficiency and make the station complex and expensive.

A wind-rotor power station is known from patent KZ 5595. Plants of the power station consist of wind-rotor units, or modules, comprising cylindrical guiding apparatuses and vertical blade wind rotors designed using the Hellman's formula and connected to a generator group. However such power plant also has disadvantages. The diameters of the guiding apparatuses and rotors of the modules as well as number of blades in the rotors of the modules are changed according to the Hellman's formula that does not give sufficient results in real conditions and does not include multiple conditions of operating wind power plants in the surface layer air flow.

A wind-driven power plant and a wind-driven power station are known from patent EA 003784 B1. The wind-driven power plant comprises one or more cylindrical units arranged vertically one after the other; each unit comprises a stator with concavo-convex plates and a rotor with concavo-convex blades attached to the vertical shaft common for all units; the lower end of the shaft being connected to the rotor of a generator. The rotors have constant outer diameter in all units. The number of units in a wind-driven power plant is from 1 to 50 depending on the height of the unit and wind conditions. There are gaps with annular conical screens between the units of a wind-driven power plant. The rotors of all units comprise similar number of blades.

However this technical solution also has some disadvantages. As the wind speed is different at different height above the ground, the power of units of a wind-driven power plant at different heights is different. The power of units located in the lover part of the plant is lover, and such units connected to the common shaft can rotate as fans driven by the upper units decreasing the total power of the wind-driven power plant. This disadvantage cannot be overcome by changing only the design of the units. When it is required to increase the power of a wind-driven power plant, the stator and rotor diameter is to be increased. It results in a decrease in the rotor rotation speed though the wind speed remains the same. Slow electric generators used it such condition must have big size and weight.

The objective of the present invention is to develop a wind-driven power plant of module type having the high coefficient of the utilization of wind energy and increased specific electric power production per 1 kW of determined power, and at the same time to simplify the process of assembling units into a column and to decrease the weight and size of the electric generators for achieving their higher specific power when the generator shaft is directly (without a reduction unit) connected to the shaft of the units.

## Disclosure of the Invention

The objective is achieved by providing independent rotation of the unit rotors when they can rotate with different rotation speeds and produce power according to the local wind speed, and they can drive the stator and rotor of a generator in opposite directions thereby allowing to design generators of smaller size and weight compared to traditional generators of the same power wherein only the rotor rotates but the stator remains stable. It is due to increasing resultant speed of the generator magnetic system in relation to the generator winding leading to the increase in specific power of the generators or their lower materials consumption per 1 kW of the generator power.

The objective is also achieved by designing a wind-driven power plant comprising a few coaxial cylindrical units of a wind turbine, each unit comprising a stator with concavo-convex plates and a rotor with concavo-convex blades, and an electrical generator having a rotor mechanically connected to at least one rotor of the wind turbine, wherein the wind-driven power plant according to the present invention comprises at least one electrical generator positioned between the units of the wind turbine. The rotor of this generator is mechanically connected to the rotor of at least one wind turbine unit located at one side of the generator, and the stator is connected to the rotor of at least one wind turbine unit located at the other side of the generator. The stator plates and the rotor blades of at least one wind turbine unit located at one side of the generator and the stator plates and the rotor blades of at least one wind turbine unit located at the other side of the generator are arranged so that the rotors of said units rotate in the opposite directions under wind.

It is preferable to have the stator of the generator provided with concavo-convex blades arranged so that under wind they produce additional torque in the same direction as the rotor of the wind turbine unit connected to this stator.

The electric generator preferably is a heteropolar valve generator with a system of automatic control of wiring connections and field control. The wind-driven power plant can be equipped with a relay for switching on generator excitation when there is wind and switching it off for the time when there is no stir in the air.

Furthermore, the wind-driven power plant can be further provided with a means for controlling output power to provide rated speed of rotor unit rotation in the range from 0.5 to 0.6 of the rotary speed of the rotor units during idle running when the wind blows in real conditions.

The wind-driven power plant comprises a few generators which can be connected in parallel to common load or each of them can have its own load.

It is preferable to arrange more than one wind turbine units at each side of the generator, wherein the power of the units rotating the stator and rotor of the generator are equal.

It is preferable to arrange more than one wind turbine units at each side of the generator, wherein the power $N_{st}$ of the units rotating the stator and the power $N_{rt}$ of the units rotating the rotor correspond to the equation:

$$N_{st} = k \cdot N_{rt}$$

wherein k is the ratio of the stator moment of inertia to the rotor moment of inertia.

Units of the wind-driven power plant can be arranged vertically as well as horizontally, for example on a floating platform. When the units are positioned vertically, the number of blades in the upper units is the same or less than the number of blades in the lower units by 2 to 50%, and the plates of the stators are spaced uniformly along the circumference in 0.6-60° depending on the stator diameter. When the units are arranged horizontally, the plant is additionally provided with weathercock rudders to keep it perpendicular to the wind direction. Furthermore, the units can be arranged horizontally across flanks of hills, passes and gorges.

Preferably support stator covers having bearings are fixed at each side of a wind turbine unit. Each rotor of a wind turbine unit comprises a shaft set in said bearings.

The stator of each generator can comprise a shaft rigidly fixed in it, while the plant can be provided with flexible couplings for connecting the shafts of the wind turbine units rotors located at different sides of the generator to the rotor shaft and stator shaft of the generator placed between them.

For connecting to each other the shafts of the wind turbine unit rotors arranged at one side of the generator, flexible couplings can be provided. The couplings assist in preventing negative action of sudden wind blasts on the elements of the wind-driven power plant.

The shafts of generators and the shafts of the wind turbine unit rotors connected to the corresponding shafts of the generator preferably have channels for cables from stator and rotor wirings. Said shafts have brush units with contact rings for connecting outlets of the generator wirings, the contact rings arranged on the generator shafts or on the ends of the shafts of the wind turbine unit rotors.

## Brief Description of Drawings

Fig. 1 is a general view of the plant with one wind turbine unit at each side of the generator;
Fig. 2 is the same view but with two wind turbine units at each s3 of the generator;
Fig. 3 is the view of the plant with a few generators and a few wind turbine units at each side of the generator;
Fig. 4 is a longitudinal section view of a wind turbine unit fragment;
Fig. 5 and 6 is a cross-section view of the wind turbine units positioned at different sides of the generator;
Fig. 7 is a side view of the generator with the flexible coupling and the blades of the stator;
Fig. 8 is a top view of the same generator as shown in Fig. 7.

## Embodiment of the Invention

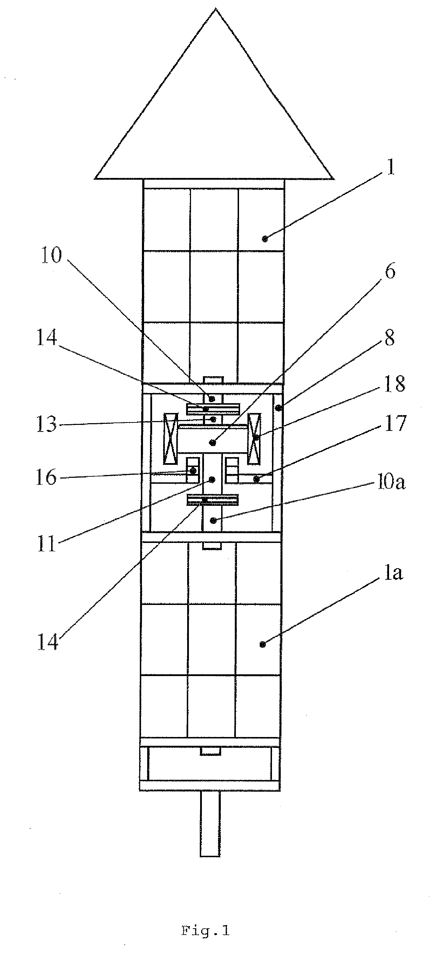

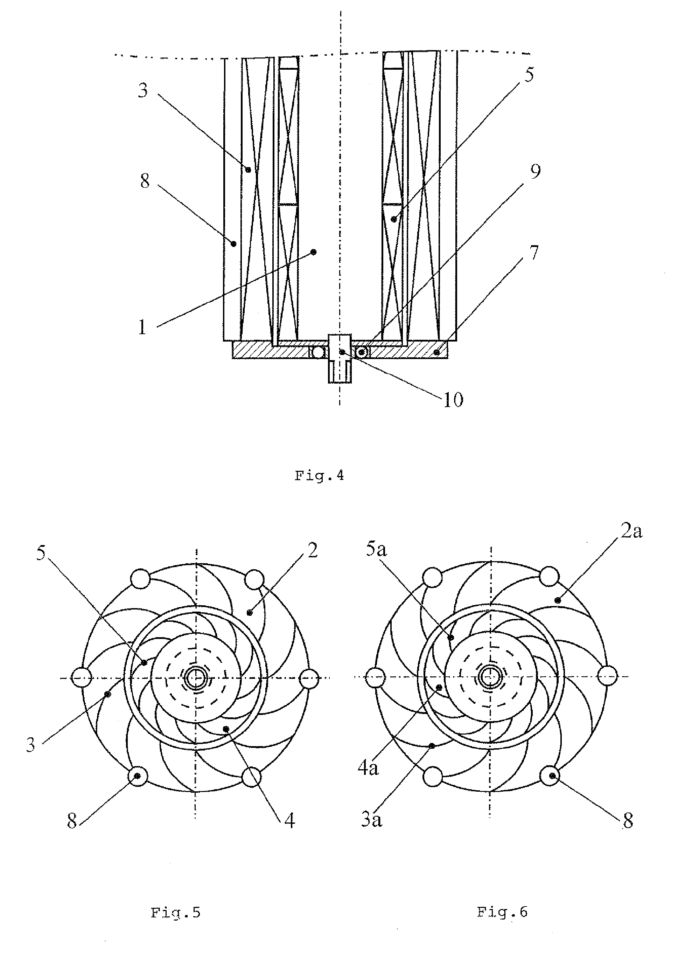

The wind-driven power plant shown in Fig. 1 comprises two coaxial cylindrical units 1 and 1a of the wind turbine and an electric generator 6 placed between the units. As shown in Figs. 4-6 each of the cylindrical units 1 and 1a comprises a stator 2 and 2a correspondingly with concavo-convex plates 3 and 3a and a rotor 4 and 4a with concavo-convex blades 5 and 5a. The plates 3 of the stator 2 and the blades 5 of the rotor 4 of the wind turbine unit positioned at one side of the generator 6, for example above it (Fig. 5), and the plates 3a of the stator 2a and the blades 5a of the rotor 4a of at least one wind turbine unit 1a positioned at the other side of the generator 6 (Fig. 6) are arranged so that the rotors 4 and 4a of said units 1 and 1a rotate in opposite directions under the action of wind.

Covers 7 are fixed at two sides of each wind turbine unit, said covers are interconnected with posts 8. Bearings 9 are mounted in the covers 7, and the rotors 4 of each wind turbine unit have shafts 10 fixed in the bearings 9. Each wind turbine unit is designed as an independent unit. It provides for unification of elements and therefore simplification of production and mounting of the wind-driven power plants.

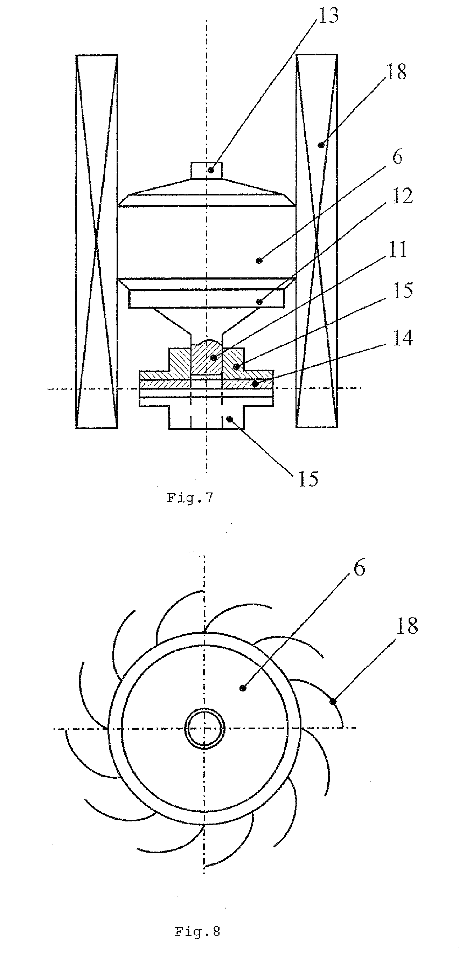

The stator of the generator 6 has a shaft 11 fixed to the stator with, for example a flange 12, and the rotor of the generator 6 has a shaft 13 (Fig. 7). The shafts 11 and 13 of the generator 6 are connected to the corresponding shafts 10 and 10a of the rotors 4 and 4a of the wind turbine units 1 and 1a positioned at different sides of the generator 6 with flexible couplings 14. The shafts 10 and 10a of the rotors 4 and 4a of the wind turbine units 1 and 1a and the shafts 11 and 13 of the stator and rotor of the generator 6 can be connected to the flexible couplings 14 by one of the known methods: ends of the shafts 11 and 13 of the stator and rotor of the generator 6 and the shafts 10 and 10a of the rotors 4 and 4a of the wind turbine units can have an oval, multifaceted or round shape with profiled teeth or splines or slots, and the flexible couplings 14 in its turn can be provided with bushings 15 having corresponding oval, multifaceted or round shape with profiled teeth or splines or slots. In the body of the generator 6 there is an opening (not shown) for outlet cable from the stator wiring, said cable passes through an opening in the shaft 11 (not shown) and is connected to the brush unit 16. The cable is prevented from rotation by a spacer 17 fixed to the post 8 (Figs. 1-3). Cables from the rotor wirings (if provided) are arranged in the same way. If permanent magnets are used for exciting the generator, the brash units are mounted on only one of the shafts. Concavo-convex blades 18 are mounted on the stator of the generator 6 for better cooling of the generator and for its rotation in the same direction as the rotor of the connected unit 1a.

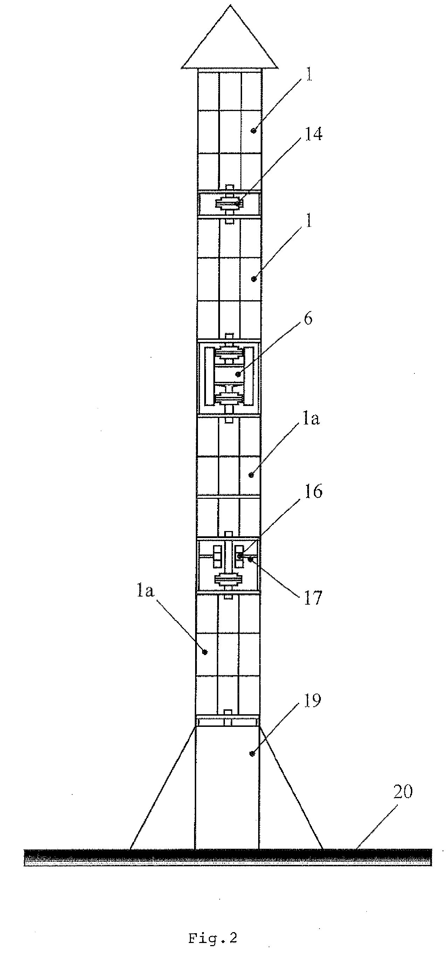

A few wind turbine units 1 and 1a can be arranged at each side of the generator 6, for example two of them as shown in Fig. 2.

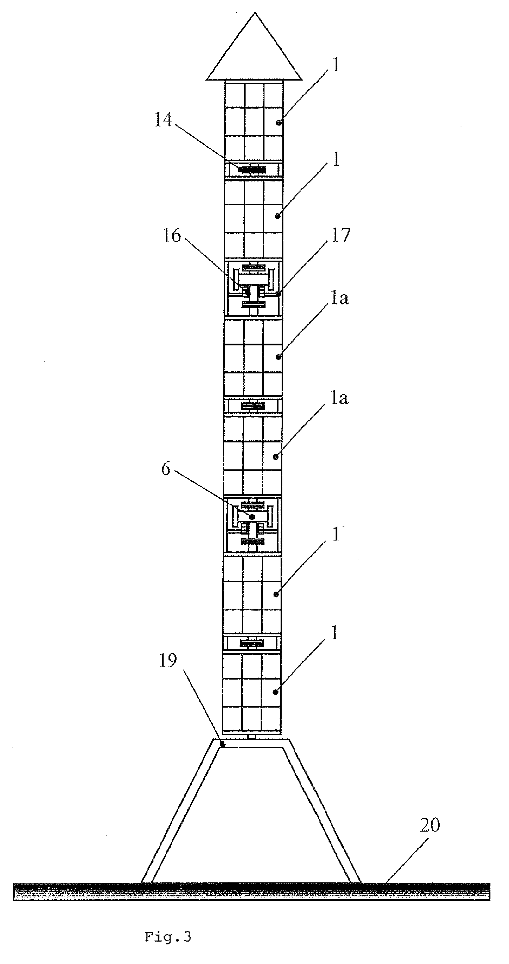

If it is required to increase the power of the wind-driven power plant, a few generators are mounted as shown in Fig. 3, and few units are arranged at each side of the generator wherein the number and/or the power of the units rotating the stator of the generator is greater than the number and power of the units rotating the rotor of the generator. It is because the stator has higher weight and diameter than the rotor, and therefore its moment of inertia is bigger than that of the rotor, and higher starting force is required to overcoming the moment. When the stator diameter is not big, the stability of the structure is provided by bracings (not shown).

The wind-driven power plant can be mounted vertically on tubular posts (Fig. 1), on supports used for power lines, on tower poles of retransmitters, on conical (Fig. 2), cylindrical or three- or four-point (Fig. 3) bases 19 on the ground or on a foundation bed. When required power is high, the wind-driven power plants are combined into multiplant wind-driven power stations and positioned according to the local wind rose. When positioned close to each other, they are connected by bridges.

There are many places on earth with permanent strong wind with high speed close to the surface. It is typical for mountain passes and narrow gorges. The famous "Krymskaya Bora" is among such winds, when the wind rises along a flank of hill and then blows down to the valley with a speed of 40-60 m/s, and also winds in Greenland. In such conditions horizontal positioning of wind-driven power plants across hill flanks and inclined surfaces in narrow passes and across a gorge on tension bracings is more effective. The plant is held perpendicular to the wind direction by weathercock rudders (not shown).

During operation of the wind-driven power plant, in each unit 1 (Figs. 4-6) the stator 2 with plates 3 receives air flow, provides its compression and acceleration and directs it to the blades 5 of the rotor 4. The air flow acts on the blades 5 connected to the shaft 10 of the rotor 4 causing rotation of this shaft 10 and connected to it rotor of the generator 6. The stator 2a of the unit 1a with plates 3a also receives air flow, provides its compression and acceleration and directs it to the blades 5a of the rotor 4a. The air flow acts on the blades 5a connected to the shaft 10 causing rotation of this shaft 10a and connected to it stator of the generator 6 in the direction opposite to the rotation direction on the generator rotor. The rotation of the rotor and stator of the generator in opposite directions with the rated speed of the unit rotor rotation results in increasing of the generator power compared to a generator in which only the rotor is in rotation but the stator is stationary. The rotation of the rotor and stator of the generator in opposite directions increases the speed of motion of its magnetic system relative to the wiring. It results in rise of electromotive force and power of the generator to the same extent in accordance with the magnetic induction law as follows from the formula:

$$e = L \cdot v \cdot B$$

wherein

e is an instantaneous value of the voltage inn a conductor;

L is the length of the conductor active part;

v is the speed of relative motion of the conductor in a magnetic field;

B is magnetic induction.

In above conditions the gained power is increased as corresponds to the energy characteristics of a wind-driven power plant of this type. Energy is extracted through the brush units 16 with the contact rings arranged on the shaft free ends of generators or units. There are channels in the rotor shafts and the unit shafts for laying cables from the generators to the brush units. When the wind speed changes, paths of winding are automatically commutated for maintaining optimal rotation speed under load in the range of 0.5-0.6 of the rotation speed without load at a particular speed of the wind.

**Claims**

1. A wind-driven power plant comprising:

   a few coaxial cylindrical units of a wind turbine, each unit comprising a stator with concavo-convex plates and a rotor with concavo-convex blades; and
   an electrical generator having a rotor mechanically connected to at least one rotor of the wind turbine,
   **characterized in that** said plant comprises at least one electric generator positioned between the units of the wind turbine; the rotor of the generator is mechanically connected to the rotor of at least one wind turbine unit located at one side of the generator, and the stator is connected to the rotor of at least one wind turbine unit located at the other side of the generator; the stator plates and the rotor blades of at least one wind turbine unit located at one side of the generator and the stator plates and the rotor blades of at least one wind turbine unit located at the other side of the generator are arranged so that the rotors of said units rotate in the opposite directions under wind.

2. The wind-driven power plant according to claim 1 **characterized in that** the stator of the generator is provided with concavo-convex blades arranged so that under wind they produce additional torque in the same direction as the rotor of the wind turbine unit connected to this stator of the generator.

3. The wind-driven power plant according to claim 1 **characterized in that** the electric generator is a heteropolar generator with a system of automatic control of wiring connections and field control.

4. The wind-driven power plant according to claim 3 **characterized in that** it is provided with a relay for switching on generator excitation when there is wind and switching it off for the time when there is no stir in the air.

5. The wind-driven power plant according to any of claims 3 or 4 **characterized in that** it is further provided with a means for controlling output power to provide rated speed of rotor unit rotation in the range from 0.5 to 0.6 of the rotary speed of the rotor units during idle running when the wind blows in real conditions.

6. The wind-driven power plant according to claim 1 **characterized in that** it comprises a few electric generators connected in parallel to common load.

7. The wind-driven power plant according to claim 1 **characterized in that** it comprises a few electric generators each having separate load.

8. The wind-driven power plant according to claim 1 **characterized in that** more than one wind turbine units are arranged at each side of the generator, wherein the power of the units rotating the stator and rotor of the generator are equal.

9. The wind-driven power plant according to claim 1 **characterized in that** more than one wind turbine units are arranged at each side of the generator, wherein the power $N_{st}$ of the units rotating the power $N_{rt}$ of the units rotating rotor of the generator correspond to the equation:

$$N_{st} = k \cdot N_{rt},$$

wherein k is the ratio of the stator moment of inertia to the rotor moment of inertia.

10. The wind-driven power plant according to claim 1 **characterized in that** the units are arranged vertically.

11. The wind-driven power plant according to claim 1 **characterized in that** the number of blades in the upper units is the same or less than the number of blades in the lower units by 2 to 50%, and the plates of the stators are spaced uniformly along the circumference in 0.6-60° depending on the stator diameter.

12. The wind-driven power plant according to claim 1 **characterized in that** the units are arranged horizontally, and the plant is additionally provided with weathercock rudders to keep it perpendicular to the wind direction.

13. The wind-driven power plant according to claim 12 **characterized in that** the mounted on a floating platform.

14. The wind-driven power plant according to claim 12 **characterized in that** it is placed across flanks of hills, passes and gorges.

15. The wind-driven power plant according to claim 1 **characterized in that** support stator covers having bearings are fixed at each side of a wind turbine unit, and each rotor of a wind turbine unit comprises a shaft set in said bearings.

16. The wind-driven power plant according to claim 1 **characterized in that** the stator of each generator comprises a shaft rigidly fixed in it, while the plant is provided with flexible couplings for connecting the shafts of the wind turbine unit rotors located at different sides of the generator to the rotor shaft and stator shaft of the generator placed between them.

17. The wind-driven power plant according any of claims 8 or 9 **characterized in that** is provided with flexible couplings for connecting with each other the shafts of the wind turbine unit rotors located at one sides of the electric generator.

18. The wind-driven power plant according to claim 1 **characterized in that** the shafts of generators and the shafts of the wind turbine unit rotors connected to the corresponding shafts of the generator have channels for laying cables from cables from stator and rotor wirings, said shafts have brush units with contact rings for connecting outlets of the generator wirings, wherein the contact rings are arranged on the generator shafts or on the ends of the shafts of the wind turbine unit rotors.

Fig.1

Fig.2

Fig.3

Fig.4

Fig.5                                                    Fig.6

Fig.7

Fig.8

## INTERNATIONAL SEARCH REPORT

| International application No. |
|---|
| PCT/RU 2008/000184 |

| A. CLASSIFICATION OF SUBJECT MATTER |
|---|
| *F03D 3/04 (2006.01)* |
| According to International Patent Classification (IPC) or to both national classification and IPC |

| B. FIELDS SEARCHED |
|---|
| Minimum documentation searched (classification system followed by classification symbols) |
| F03D 1/00-1/06, 3/00-3/06, 5/00-5/06, 7/00-7/06, 9/00-9/02, 11/00-11/04 |
| Documentation searched other than minimum documentation to the extent that such documents are included in the fields searched |
| Electronic data base consulted during the international search (name of data base and, where practicable, search terms used) |
| RUPAT, USPTO, Esp@cenet |

C. DOCUMENTS CONSIDERED TO BE RELEVANT

| Category* | Citation of document, with indication, where appropriate, of the relevant passages | Relevant to claim No. |
|---|---|---|
| Y | EA 003784 B1 (BOLOTOV ALBERT VASILEVICH et al.) 28.08.2003, the claims, figures 1, 2 | 1-18 |
| Y | SU 1787205 A3 (INSTITUT AVTOMATIKI AN KIRG SSR) 07.01.1993, the claims, figure | 1-18 |
| Y | UA.30272 A (SIDORYUK YU. L. ) 15.11.2000, figures 1, 4 | 8, 9 |
| A | DE 2502783 A1 (SCHRODER, KARL) 29.07.1976, figure 1 | 1-18 |
| A | US 5478197 A (OLAF SCHATZ et al.) 26.12.1995 | 1-18 |

☐ Further documents are listed in the continuation of Box C.  ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 22 May 2008 (22.05.2008) | 19 June 2008 (19.06.2008) |

| Name and mailing address of the ISA/ | Authorized officer |
|---|---|
| **RU** | |
| Facsimile No. | Telephone No. |

Form PCT/ISA/210 (second sheet) (July 1998)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 1766765 A
- KZ 3355
- KZ 5595
- EA 003784 B1

### Non-patent literature cited in the description

- Windkraftanlagen. B.G. Teubner, 1993